# EUROPÄISCHE PATENTSCHRIFT

(11) **EP 3 156 546 B1**
(45) Veröffentlichungstag und Bekanntmachung des Hinweises auf die Patenterteilung: **26.06.2019**
(21) Anmeldenummer: 16002096.2
(22) Anmeldetag: 28.09.2016
(51) Int. Cl.: E02B 8/08

(54) **FISCHSCHLEUSE**
FISH LOCK
ÉCLUSE À POISSONS

(30) Priorität: 12.10.2015 AT 6592015
(43) Veröffentlichungstag der Anmeldung: 19.04.2017
(73) Patentinhaber: FISHCON GmbH, 4020 Linz (AT)
(72) Erfinder: Mayrhofer, Bernhard, 4431 Haidershofen (AT)

(56) Entgegenhaltungen:
- DE-B3- 10 336 446
- DE-U1-202014 007 208

## Beschreibung

Die Erfindung betrifft eine Fischschleuse zum Überwinden von Niveauunterschieden in Fließgewässern, um eine Organismenwanderung in beide Richtungen zu ermöglichen.

### Stand der Technik

Fließgewässer sind abschnittsweise aufgrund von Querbauwerke nicht für Organismen durchgängig. Um die Durchgängigkeit wieder herzustellen und somit eine Organismenwanderung zu ermöglichen, sind derzeit unterschiedliche wasserbauliche Einrichtungen bekannt. Die gängigste Methode ist die Errichtung von Fischwegen um das Querbauwerk, welches die Durchgängigkeit behindert. Fischwege gibt es in unterschiedlichen Ausführungen, wie zum Beispiel als Schlitzpässe, gewässertypische Umgehungsgerinne oder naturnahe Beckenpässe. Sie sind offene Gerinne, bei denen durch natürliche oder künstliche Vorrichtungen das Gefälle des Fließgewässers gesteigert wird und zugleich eine Durchgängigkeit ermöglicht wird. Fischwege benötigen große Flächen, eine hohe Dotation und sind aufgrund teilweiser hoher Strömungsgeschwindigkeiten, Energiedissipationen und Stufen für manche aquatische Organismen schwer oder nicht in beide Richtungen passierbar. Des Weiteren ist eine energetische Nutzung der Dotation kaum möglich und die Errichtung des Fischwegs ist bei großen Fallhöhen teuer. Fischlifte sind eine weitere Möglichkeit zur Sicherstellung der Durchgängigkeit und werden vor allem für große Fallhöhen eingesetzt. Fischlifte sind Bauwerke, welche mit einer mechanischen Vorrichtung die Fische vom Unterwasser in das Oberwasser befördern und werden in unterschiedlichen Ausführungen verwirklicht. Zum Teil wird bei Fischliften die Lockströmung energetisch genutzt. Bei diesen Ausführungen ist üblicherweise ein Bypass erforderlich. Fischlifte sind aufwändig in der Konstruktion und zeitweise nicht für Organismen zugängig, weil zum Beispiel beim Hochtransport der Organismen das Verschlussorgan zum Unterwasser geschlossen wird. Fischschleusen, eine weitere Möglichkeit zur Herstellung der Durchgängigkeit, sind ähnlich aufgebaut wie Schiffsschleusen. Sie bestehen aus einer Kammer mit einer verschließbaren Öffnung zum Oberwasser und einer zum Unterwasser. Die beiden Verschlussorgane der Kammer werden abwechselnd geöffnet, sodass Fische ein- und ausschwimmen können. Durch zusätzliche kleine Öffnungen auf der verschlossenen Seite oder andere Vorrichtungen wird eine Lockströmung verwirklicht. Der Wasserspiegel in der Kammer schwankt, je nachdem ob der Verschluss zum Oberwasser oder zum Unterwasser geöffnet ist. Die Fischschleuse ist somit nur zeitweise für Fische zugängig. Teilweise wird bei Fischschleusen mit Hilfe von Zusatzvorrichtungen die Lockströmung energetisch genutzt. Neben der offenen Fischschleuse mit schwankendem Wasserspiegel gibt es auch Fischschleusen unter Wasser, die ständig gefüllt sind und der Druck in der Kammer wechselt. Zu diesen zählt auch der im Patent DE 102012020781 B3 beschriebene Fischdurchlass. Dieser besteht aus einer Druckkammer und mehreren verschließbaren Kanälen, die eine Turbine mit der Kammer, dem Oberwasser und dem Unterwasser verbinden. Dieser Aufbau erlaubt eine energetische Nutzung der Lockströmung und arbeitet nach einem ähnlichen Prinzip, wie die in diesem Patent beschriebene Fischschleuse. Es gibt jedoch gravierende Unterschiede bei der technischen Ausführung und im Betrieb. Die in diesem Patent beschriebene Fischschleuse weist zwei Kammern auf und einen Kanal, der die beiden Kammern verbindet sowie keine Kanäle, die eine Turbine direkt mit dem Oberwasser oder dem Unterwasser verbinden. Des Weiteren gibt es keinen Betriebszustand, bei dem der Durchlassabfluss vom Oberwasser ohne Eintritt in die Kammern über die Turbine zum Unterwasser geleitet wird. Der im Patent DE 102012020781 B3 beschriebene Fischdurchlass ist darüber hinaus nur zum halben Zeitraum vom Unterwasser beziehungsweise vom Oberwasser für Organismen zugängig. Die in diesem Patent beschriebene Fischschleuse ist hingegen aufgrund der zwei Kammern ständig beidseitig für Organismen zugängig, abgesehen von der kurzen Umschaltphase. Ein weiteres Fischschleusensystem wird im Gebrauchsmuster DE202014007208 offenbart. Dieses offenbart die Merkmale des Oberbegriffs des Anspruchs 1 und unterscheidet sich von dem hier beschriebenen System aufgrund der Anbindung der Turbine an die Kammern sowie durch die Positionierung der Vorrichtung zur Energieumwandlung, welche im Gebrauchsmuster in einem beweglichen oder fest verbundenen Steg, der die beiden Kammern bildet, erfolgt.

### Technische Aufgabe

Der Erfindung liegt demnach die technische Aufgabe zugrunde, die Nachteile des Standes-der-Technik zu überwinden. Insbesondere ist es Aufgabe der Erfindung die Durchgängigkeit eines Fließgewässers herzustellen und somit eine Organismenwanderung in beide Richtungen zu ermöglichen, welche kostengünstig ist, einen geringen Platzbedarf besitzt, einfach zu integrieren ist, keine aquatische Organismen von der Wanderung ausschließt, über große Zeiträume für Organismen zugängig ist und eine energetische Nutzung ermöglicht. Des Weiteren soll die Erfindung bei Bedarf eine Spülung des Querbauwerks und den damit verbundenen Sedimenttransport ermöglichen, als Entlastungsbauwerk dienen oder als Konzept für ein Wasserkraftwerk mit integrierter Organismenwanderhilfe genutzt werden können.

Dies wird erfindungsgemäß durch die kennzeichnenden Merkmale des Anspruchs 1 erreicht. Weitere vorteilhafte Ausgestaltungen werden gemäß den Unteransprüchen vorgeschlagen.

### Erfindungsgemäße Lösung

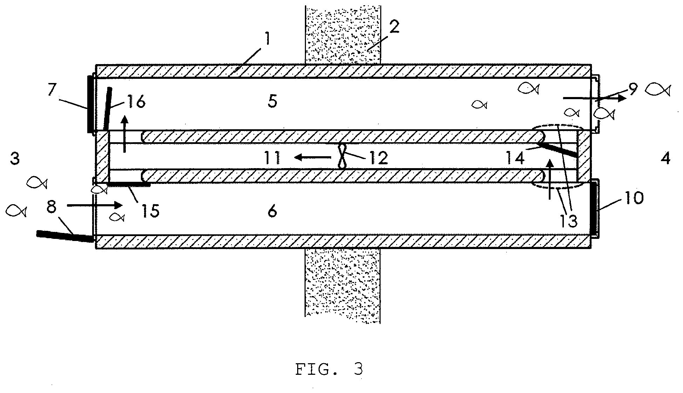

Die in den Ansprüchen beschriebene Fischschleuse besteht aus zwei oder mehreren Kammern, welche aus unterschiedlichen Materialien und Produkten hergestellt sein können, unterschiedliche Größen, Formen oder Neigungen aufweisen können und in das Querbauwerk integriert oder freistehend angeordnet sein können. Beide Kammern haben jeweils ein Verschlussorgan zum Oberwasser und ein Verschlussorgan zum Unterwasser. Die Nutzung von Verschlussorganen unterschiedlicher Ausführungen wie beispielsweise Schütze oder Klappen ist dabei möglich. Teilweise können die Verschlussorgane ohne Ansteuerung verwirklicht werden. Zum Beispiel können als Verschlussorgane zum Oberwasser Rückschlagklappen mit Öffnungsfedern genutzt werden. Dabei soll die Feder die Klappe öffnen, wenn das unterwasserseitige Verschlussorgan der Kammer geschlossen ist, und wenn dieses Verschlussorgan geöffnet wird, soll der Sog des Wassers die Klappe verschließen. Die Ansteuerung oder der Betrieb der Verschlussorgane erfolgt alternierend, sodass immer eine Kammer zum Oberwasser hin geöffnet ist und die andere Kammer zum Unterwasser. Nur beim Umschalten kann es für einen kurzen Zeitraum sein, dass beide unterwasserseitigen Verschlussorgane geschlossen sind. Die alternierende Ansteuerung oder der Betrieb der Verschlussorgane kann nach Zeit oder nach Organismenbestand in den Kammern erfolgen, wie Anspruch 4 beschreibt. Bei der zweiten Variante sind ein oder mehrere Sensoren zur Bestimmung des Organismenbestands in den Kammern notwendig. Um die Fische durch die Fischschleuse zu leiten, wird eine Lockströmung vorgesehen. Diese kann durch das zum Oberwasser hin geöffnete Verschlussorgan in die erste Kammer eintreten. Anschließend kann die Lockströmung durch einen Kanal fließen, der beide Kammern verbindet, und aus der zweiten Kammer in das Unterwasser austreten. Der Kanal ist mit einer Vorrichtung zur Energieumwandlung wie beispielsweise mit einer Turbine ausgestattet, wodurch die Lockströmung zur Bereitstellung von elektrischer Energie genutzt werden kann. Der Kanal kann, wie in den Abbildungen dargestellt, in die Fischschleuse integriert sein oder beispielsweise als Rohrleitung außerhalb der Fischschleuse ausgeführt sein. Bei kleinen Fallhöhen oder falls kein Bedarf für eine elektrische Energiebereitstellung vorliegt, wird anstatt der Turbine eine Vorrichtung zur Durchflussbegrenzung, also eine Drosseleinrichtung, vorgesehen. Beide Varianten erlauben die Lockströmung und sorgen für die Begrenzung des Durchflusses, sodass angemessene Fließgeschwindigkeiten in der Fischschleuse vorliegen. Die Vorrichtung zur Energieumwandlung kann so ausgeführt werden, dass eine Regulierung der Lockströmungs-Wassermenge möglich ist und somit diese an den vorliegenden Abfluss des Fließgewässers oder an die Wanderzeiten der Organismen angepasst werden kann. Um die Organismenwanderung weiters zu unterstützen, können Steighilfen, wie zum Beispiel eine raue Sohle, natürliche oder künstliche Lichtquellen und weitere Vorkehrungen vorgesehen werden, wie in Anspruch 2 beschrieben wird. Zum Schutz der Organismen vor Eintritt in die Turbine oder Drosseleinrichtung kann eine Vorrichtung wie ein Netz oder Feinrechen installiert werden, wie Anspruch 3 beschreibt. Mit ein oder mehreren zusätzlichen Verschlussorganen, Kammern oder Kanälen kann eine gleichmäßigere Durchströmung der Vorrichtung zur Energieumwandlung erreicht werden beziehungsweis die Lockströmung über große Bereiche der Kammern erzielt werden. Somit ist es möglich, eine kontinuierliche Energiebereitstellung oder einen gleichmäßigen Abfluss zu verwirklichen und die Effektivität der Fischschleuse zu steigern. Zum Beispiel kann bei der in Fig. 3 dargestellten, nicht erfindungsgemässen Ausführungsform durch einen zusätzlichen verschließbaren Kanal die Lockströmung nach der Vorrichtung zur Energieumwandlung in der Umschaltphase, bei der beide unterwasserseitigen Verschlussorgane geschlossen sind, in das Unterwasser geleitet werden und ein konstanter Betrieb ermöglicht werden. Ansonsten ist der zusätzliche Kanal geschlossen. Eine andere Möglichkeit um gleichmäßig Energie in das Netz einzuspeisen, ist die Verwendung eines elektrischen oder mechanischen Energiespeichers, der während der Umschaltphase entladen wird. Eine sehr einfache Variante der Fischschleuse kann mit nur einer Kammer,ausgeführt sein und die Lockströmung wird beispielsweise durch kleine Öffnungen in oder neben den Verschlussorganen ermöglicht. Diese Öffnungen können mit Turbinen ausgestattet sein. Weitere Varianten der Fischschleuse können mit einer oder mehreren Pumpen ausgeführt sein. Die Pumpen werden genutzt um die Lockströmung zu erzeugen, wobei sie beispielsweise für den Organismenaufstieg Wasser vom Unterwasser ansaugen und in die zum Unterwasser geöffnete Kammer pumpen, von der das Wasser als Lockströmung austritt. Dadurch ist kein Abfluss vom Oberwasser zum Unterwasser erforderlich.

Die beschriebene Fischschleuse ist besonders geeignet zum Überwinden von mittleren Fallhöhen von ca. 2 m bis 10 m, weil bei zu niedrigen Fallhöhen Fischwege aufgrund geringerer Kosten im Vorteil sind und zu große Fallhöhen die Organismen aufgrund der hohen Druckschwankung in den Kammern schädigen könnten. Bei Fallhöhen unter 10 m gibt es kaum eine Gefährdung, wie mehrere wissenschaftliche Untersuchungen zu der Thematik zeigen. Um eine schnelle Druckänderung in den Kammern zu verhindern, werden die Verschlussorgane entsprechend langsam geschlossen beziehungsweise geöffnet oder weitere Vorkehrungen wie Bypässe oder Druckausgleichskammern vorgesehen. Um dennoch große Fallhöhen zu überwinden, ist eine Serienschaltung der Fischschleuse möglich oder eine Kombination mit anderen Fischwanderhilfen. Durch eine Parallelschaltung von mehreren Fischschleusen kann die Effektivität gesteigert werden. Die Öffnungen der Fischschleuse können direkt an das Gewässer angebunden sein, über offene oder geschlossene Gerinne sowie über Fischwege, mit denen bereits ein Teil des Niveauunterschieds überwunden wird, wie in Anspruch 5 beschrieben. Die Fischschleuse kann als Wasserkraftwerk, bei dem die Energiebereitstellung im Vordergrund steht, betrieben werden und eignet sich gut zur Restwassernutzung mit integrierter Organismenwanderhilfe. Auch als Entlastungsbauwerk oder zum kontinuierlichen oder diskontinuierlichen Sedimenttransport, wie zum Beispiel zur Stauraumspülung des Querbauwerks, kann die Fischschleuse genutzt werden. Dazu werden die Verschlussorgane einer oder beider Kammern teilweise oder vollständig geöffnet. In diesem Betriebszustand ist ein Organismenaufstieg nicht oder nur eingeschränkt möglich. Die Anlage kann so konzipiert werden, dass eine Vorfertigung im Werk möglich ist, sie fertig als Kompaktanlage zum Fließgewässer transportiert und dort errichtet wird. Eine vollständige Errichtung vor Ort oder der Zusammenbau aus mehreren vorgefertigten Bauteilen sind ebenfalls möglich.

Zeitlicher Ablauf eines Schleusenvorgangs:
Bei der Inbetriebnahme wird die gesamte Fischschleuse mit Wasser gefüllt und anschließend eine Kammer zum Oberwasser hin geöffnet und die andere Kammer zum Unterwasser. Die Stellung der Verschlussorgane entspricht somit dem Zustand, welcher in der ersten Phase vorliegt.

Phase 1: In der ersten Phase können die Organismen vom Ober- und Unterwasser in die geöffneten Kammern eintreten. Dabei werden sie durch die Lockströmung geleitet.

Umschaltphase: Bei dieser Phase wird der Zustand der Verschlussorgane geändert. Dazu schließt zuerst das zum Unterwasser hin geöffnete Verschlussorgan, die Verschlussorgane zum Oberwasser wechseln ihre Stellung und zuletzt öffnet das Verschlussorgan zum Unterwasser, der zuvor zum Oberwasser hin geöffneten Kammer. Die Stellungsänderungen der Verschlussorgane können auch teilweise zeitgleich erfolgen, um einen gleichmäßigen Abfluss zu gewährleisten. Sie werden so angesteuert, dass eine langsame Druckänderung in den Kammern vorliegt und keine Organismen geschädigt werden. Falls zusätzliche Klappen vorgesehen sind, ändern diese ebenfalls ihre Position.

Phase 2: Nachdem die Verschlussorgane ihre neue Stellung eingenommen haben, ist es möglich, dass die Organismen von den Kammern austreten und andere Organismen eintreten können, um flussaufwärts oder flussabwärts zu wandern. Die Organismen werden dabei ebenfalls von der Lockströmung geleitet.

Nach der Phase 2 folgt wieder die Umschaltphase und der Schleusenvorgang beginnt mit der ersten Phase von vorne, wobei nun die bereits in der Kammer befindlichen Organismen aus diesen austreten und andere Organismen eintreten können.

Die Erfindung wird anhand zweier Ausführungsbeispiele gemäß den Zeichnungen näher erläutert, wobei
Fig. 1 eine Seitenansicht einer Ausführungsform der erfindungsgemäßen Fischschleuse,
Fig. 2 einen Schnitt gemäß der Linie A-A in Fig. 1 einer einfachen Ausführungsform der erfindungsgemäßen Fischschleuse und
Fig. 3 einen Schnitt gemäß der Linie A-A in Fig. 1 einer weiteren nicht erfindungsgemäßen Ausführungsform mit zusätzlichen Klappen zeigen.

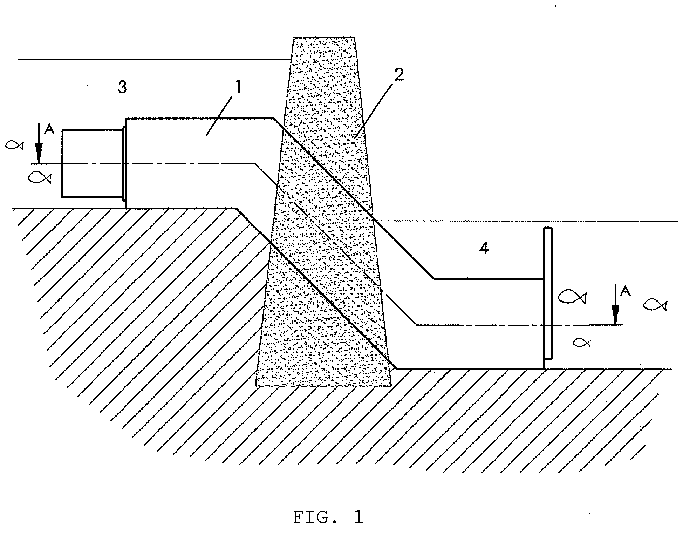

Bei der in Fig. 1 gezeigten Fischschleuse 1 handelt es sich um eine durch das Querbauwerk 2 reichende Anlage, welche abschnittsweise mit einer Neigung ausgeführt ist und direkt an das Oberwasser 3 und Unterwasser 4 angebunden ist.

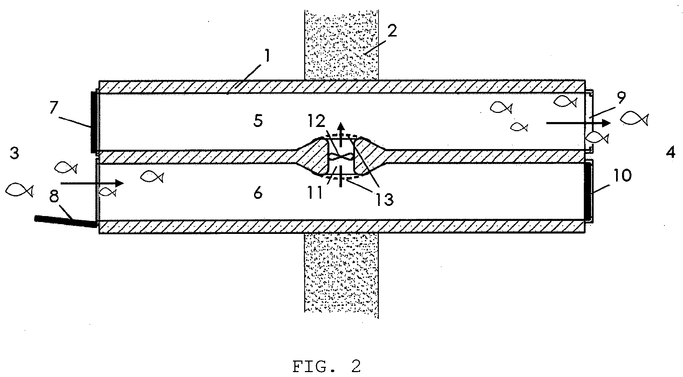

In der dazugehörigen Schnittansicht A-A, welche Fig. 2 zeigt, ist die geschnittene erfindungsgemäße Fischschleuse 1 mit dem Querbauwerk 2 erkennbar. Weiters werden die beiden Kammern 5 und 6 dargestellt, die Verschlussorgane 7 und 8 zum Oberwasser 3 und die Verschlussorgane 9 und 10 zum Unterwasser 4, sowie der Kanal 11 welcher die beiden Kammern 5 und 6 verbindet und mit einer Vorrichtung zur Energieumwandlung 12 ausgestattet ist. Bei den beiden Kanaleingängen sind Feinrechen 13 vorgesehen, um einen Eintritt von Organismen zu verhindern. Die Abbildung zeigt die Fischschleuse 1 in einem Betriebszustand, bei der die Organismen ein- und austreten können und falls eine Turbine vorhanden ist, Energie bereitgestellt wird. Dabei ist das Verschlussorgan 8 und 9 geöffnet. Nach der zuvor beschriebenen Umschaltphase werden die beiden Verschlussorgane 7 und 10 geöffnet und die Verschlussorgane 8 und 9 geschlossen.

In der zweiten Schnittansicht A-A, welche Fig. 3 zeigt, wird eine weitere nicht erfindungsgemäße Ausführung der Fischschleuse 1 mit den zusätzlichen Klappen 14, 15 und 16 gezeigt. Ebenfalls sind die Verschlussorgane 7, 8, 9 und 10 zum Oberwasser 3 und Unterwasser 4, die beiden Kammern 5 und 6, die Feinrechen 13 sowie der Kanal 11 mit der Vorrichtung zur Energieumwandlung 12 ersichtlich. Die drei zusätzlichen Klappen 14, 15 und 16 werden in Abhängigkeit der Positionen der Verschlussorgane 7, 8, 9 und 10 geöffnet oder geschlossen. Beim in der Abbildung dargestellten Betriebszustand ist die Kammer 6 mit dem Verschlussorgan 8 zum Oberwasser hin geöffnet und Kammer 5 mit dem Verschlussorgan 9 zum Unterwasser. Die Klappe 14 öffnet aufgrund der Druckzustände in den Kammern 5 und 6 den Weg zu der zum Oberwasser hin geöffneten Kammer 6 und leitet die Lockströmung in den Kanal 11. Die beiden Klappen 15 und 16 werden ebenfalls mit Hilfe der Druckzustände gestellt und öffnen den Weg zu der zum Unterwasser hin geöffneten Kammer 5, wodurch die Lockströmung von den Kanal 11 weiter in die zweite Kammer 5 fließt und von dort in das Unterwasser 4 austreten kann. Nach der Umschaltphase ändern alle Verschlussorgane und Klappen ihre Position und die Lockströmung tritt in Kammer 5 ein und von Kammer 6 aus. Mit Hilfe der zusätzlichen Klappen 14, 15 und 16 wird bei dieser Ausführung erreicht, dass die Vorrichtung zur Energieumwandlung 12 immer in dieselbe Richtung und gleichmäßiger durchströmt wird sowie die Lockströmung über größere Bereiche in den Kammern 5 und 6 auftritt. Durch zusätzliche Kanäle und Verschlussorgane könnte ein kontinuierliches Durchströmen ermöglicht werden.

## Patentansprüche

1. Fischschleuse zum Überwinden von Niveauunterschieden in Fließgewässern, um eine Organismenwanderung in beide Richtungen zu ermöglichen, wobei die Fischschleuse (1) aus zwei Kammern (5, 6) besteht, die beide mindestens eine Öffnung mit einem Verschlussorgan (7, 8) zum Oberwasser (3) und mindestens eine unter dem Wasserspiegel befindlichen Öffnung mit einem Verschlussorgan (9, 10) zum Unterwasser (4) besitzen sowie einen Kanal (11), der die beiden Kammern (5, 6) verbindet und mit einer als Turbine ausgebildete Vorrichtung zur Energieumwandlung (12) ausgestattet ist, bei der die Verschlussorgane (7, 8, 9, 10) alternierend betrieben werden, sodass immer eine Kammer nur zum Oberwasser (3) und die jeweils andere Kammer nur zum Unterwasser (4) hin geöffnet und für aquatische Organismen zugängig ist, Wasser als Lockströmung in die zum Oberwasser (3) geöffnete Kammer eintreten kann, durch den Kanal (11) mit der Turbine in die zum Unterwasser (4) geöffnete Kammer fließen kann und von dort in das Unterwasser (4) austreten kann, **dadurch gekennzeichnet, dass** der Kanal (11) zwei mit Feinrechen (13) vorgesehene Kanaleingängen aufweist, wobei der erste Kanaleingang an der ersten Kammer (5) und der zweite Kanaleingang an der zweiten Kammer (6) grenzt, wobei in einem ersten Betriebszustand, wobei die erste Kammer (5) durch Öffnung eines ersten Verschlussorgan (7) mit dem Oberwasser (3) und die zweite Kammer (6) durch Öffnung eines zweiten Verschlussorgans (10) mit dem Unterwasser (4) in Verbindung steht, und die beiden anderen Verschlussorgane geschlossen sind, Wasser von der ersten Kammer (5) durch den Kanal (11) in einer ersten Richtung strömt, und wobei in einem zweiten Betriebszustand, wobei die erste Kammer (5) durch Öffnung eines dritten Verschlussorgans (9) mit dem Unterwasser (4) und die zweite Kammer (6) durch Öffnung eines vierten Verschlussorgans (8) mit dem Oberwasser (3) in Verbindung steht, und die beiden anderen Verschlussorgane geschlossen sind, Wasser von der zweiten Kammer (6) durch den Kanal (11) in einer zweiten, entgegengesetzten Richtung strömt.

2. Fischschleuse nach Anspruch 1, **dadurch gekennzeichnet, dass** in den Kammern (5, 6) natürliche oder künstliche Lichtquellen und/oder Steighilfen vorgesehen sind.

3. Fischschleuse nach Anspruch 1 oder 2, **dadurch gekennzeichnet, dass** Vorrichtungen zum Verhindern des Eintritts der Organismen in die Vorrichtung zur Energieumwandlung (12) angeordnet sind, insbesondere Feinrechen oder Netze.

4. Fischschleuse nach einem der Ansprüche 1 bis 3, **dadurch gekennzeichnet, dass** für einen alternierenden Betrieb der Verschlussorgane (7, 8, 9, 10) der Kammern (5, 6) ein Zeitnehmer oder Sensor zur Erfassung des Organismenbestandes vorgesehen ist.

5. Fischschleuse nach einem der Ansprüche 1 bis 4, **dadurch gekennzeichnet, dass** die Öffnungen der Kammern (5, 6) direkt an das Fließgewässer, über ein offenes oder geschlossenes Gerinne oder mittels einer Fischwanderhilfe nach Stand der Technik, mit der bereits ein Teil des Niveauunterschieds überwunden wird, angebunden sind.

## Claims

1. A fish lock for overcoming differences in level within watercourses in order to enable a migration of organisms in both directions, wherein the fish lock (1) consists of two chambers (5, 6) which both have at least one opening with a closure member (7, 8) to the upstream water (3) and at least one below the water level opening with a closure member (9, 10) to the downstream water (4) and a channel (11) connecting the two chambers (5, 6) and a device designed as a turbine which is equipped for energy conversion (12) in which the closure members (7, 8, 9, 10) are alternately operated so that one chamber is always only open to the upstream water (3) and the other chamber is always only open to the downstream water (4) and is accessible to aquatic organisms and where water can flow as a lock flow into the chamber open to the upstream water (3) through the channel (11) with the turbine into the chamber open to the downstream water (4) and from there can escape into the downstream water (4), **characterised in that** the channel (11) comprises two channel entrances provided with fine screens (13), wherein the first channel entrance borders the first chamber (5) and the second channel entrance borders the second chamber (6), wherein in a first operational state, the first chamber (5) is connected with the upstream water (3) by opening a first closure member (7) and the second chamber (6) is connected with the downstream water (4) by opening a second closure member (10), and the other two shutters are closed, and where water flows from the first chamber (5) through the channel (11) in a first direction and wherein, in a second operational state, the first chamber (5) is connected with the downstream water (4) by opening a third closure member (9) and the second chamber (6) is connected with the upstream water (3) by opening a fourth closure member (8) and the other two closure members are closed and where water flows from the second chamber (6) through the channel (11) in a second, opposite direction.

2. The fish lock according to claim 1, **characterised in that** natural or artificial light sources and/or climbing aids are provided in the chambers (5, 6).

3. The fish lock according to claim 1 or 2, **characterised in that** that devices for preventing the entry of the organisms are arranged in the device for energy conversion (12), especially fine screens or nets.

4. The fish lock according to any one of claims 1 to 3, **characterised in that** a timer or sensor for detecting the stock of organisms is provided for alternating the operation of the closure members (7, 8, 9, 10) of the chambers (5, 6).

5. The fish lock according to any one of claims 1 to 4, **characterised in that** the openings of the chambers (5, 6) are connected directly to the watercourse via an open or closed conduit or by means of a fish migration aid according to the prior art, with which part of the difference in level is already overcome.

## Revendications

1. Écluse à poissons servant à pallier les différences de niveau dans les cours d'eau pour permettre la migration d'organismes dans les deux sens, l'écluse à poissons (1) se composant de deux chambres (5, 6), qui chacune comporte au moins une ouverture dotée d'un élément de fermeture (7, 8) pour l'eau d'amont (3) et au moins une ouverture située au-dessous du niveau de l'eau dotée un élément de fermeture (9, 10) pour l'eau d'aval (4) ainsi qu'un canal (11) reliant les deux chambres (5, 6) et équipé d'un dispositif conçu sous forme de turbine servant à la conversion d'énergie (12), dans laquelle les éléments de fermeture (7, 8, 9, 10) sont actionnés en alternance, de sorte qu'une chambre s'ouvre toujours uniquement jusqu'à l'eau d'amont (3) et que l'autre chambre s'ouvre uniquement jusqu'à l'eau d'aval (4) et est accessible aux organismes aquatiques, l'eau sous forme de tourbillons peut entrer dans la chambre ouverte jusqu'à l'eau d'amont (3), s'écouler à travers le canal (11) doté de la turbine dans la chambre ouverte jusqu'à l'eau d'aval (4) et à partir de là s'écouler dans l'eau d'aval (4), **caractérisée en ce que** le canal (11) comprend deux entrées de canal munies d'une grille fine (13), la première entrée de canal étant adjacente à la première chambre (5) et la seconde entrée de canal étant adjacente à la seconde chambre (6), dans un premier état de fonctionnement, la première chambre (5) étant en communication avec l'eau d'amont (3) par l'ouverture d'un premier élément de fermeture (7) et la seconde chambre (6) étant en communication avec l'eau d'aval (4) par l'ouverture d'un deuxième élément de fermeture (10) et les deux autres éléments de fermeture étant fermés, l'eau s'écoulant depuis la première chambre (5) par le canal (11) dans une première direction et, dans un second état de fonctionnement, la première chambre (5) étant en communication avec l'eau d'aval (4) par l'ouverture d'un troisième élément de fermeture (9) et la seconde chambre (6) étant en communication avec l'eau d'amont (3) par l'ouverture d'un quatrième élément de fermeture (8) et les deux autres éléments de fermeture étant fermés, l'eau s'écoulant depuis la seconde chambre (6) par le canal (11) dans une seconde direction opposée.

2. Écluse à poissons selon la revendication 1, **caractérisée en ce que** des sources lumineuses naturelles ou artificielles et/ou des dispositifs d'aide à l'escalade sont prévus dans les chambres (5, 6).

3. Écluse à poissons selon la revendication 1 ou 2, **caractérisée en ce que** sont prévus des dispositifs destinés à empêcher l'entrée d'organismes dans le dispositif servant à la conversion d'énergie (12), en particulier une grille fine ou des filets.

4. Écluse à poissons selon l'une des revendications 1 à 3, **caractérisée en ce qu'**une minuterie ou un capteur permettant de détecter l'existence d'organismes sert au fonctionnement en alternance des éléments de fermeture (7, 8, 9, 10) des chambres (5, 6).

5. Écluse à poissons selon l'une des revendications 1 à 4, **caractérisée en ce que** les ouvertures des chambres (5, 6) sont directement en communication avec le cours d'eau, par un conduit ouvert ou fermé ou au moyen d'un dispositif d'aide à la migration des poissons selon l'état de la technique, permettant ainsi de pallier en partie la différence de niveau.
